# EUROPEAN PATENT APPLICATION

(11) **EP 4 491 494 A1**
(43) Date of publication of application: **15.01.2025**
(21) Application number: 23851450.9
(22) Date of filing: 29.06.2023
(51) Int. Cl.: B62D 25/20

(54) **AUTOMOBILE FLOOR, BODY-IN-WHITE, AND AUTOMOBILE**

(30) Priority: 10.08.2022 CN 202210957327
(71) Applicant: Zhejiang Liankong Technologies Co., Ltd, Ningbo, Zhejiang 315336 (CN); Zhejiang Geely Holding Group Co., Ltd., Hangzhou, Zhejiang 310000 (CN)
(72) Inventor: LU, Chuanfei, Hangzhou, Zhejiang 310000 (CN); CHEN, Jinlong, Hangzhou, Zhejiang 310000 (CN); LI, Tianqi, Hangzhou, Zhejiang 310000 (CN); OU, Tianqiao, Hangzhou, Zhejiang 310000 (CN); GUAN, Chunfeng, Hangzhou, Zhejiang 310000 (CN); LIU, Jiaxin, Hangzhou, Zhejiang 310000 (CN); SONG, Yadong, Hangzhou, Zhejiang 310000 (CN)
(74) Representative: Osterhoff, Utz
(86) International application number: PCT/CN2023/104077
(87) International publication number: WO 2024/032223

(57) **Abstract**

Disclosed are a vehicle floor, a body-in-white and a vehicle. The vehicle floor includes: a front floor and a rear floor provided in sequence from a vehicle head to a vehicle tail of a vehicle body, and a connecting assembly. The rear floor includes a first area obtained through a fixed mold and a second area obtained through a variable mold, and the second area of the rear floor is connected to the front floor. The connecting assembly is provided on the second area of the rear floor and is configured to connect to a battery pack of a vehicle, and a position of the connecting assembly on the second area is determined by a size of the battery pack and a wheel base of the vehicle body.

## Description

### CROSS-REFERENCE TO RELATED APPLICATIONS

The present application claims priority to Chinese Patent Application No. 202210957327.2, filed on August 10, 2022, the entire contents of which are incorporated herein by reference.

### TECHNICAL FIELD

The present application relates to the technical field of vehicle body structure design, and in particular to a vehicle floor, a body-in-white and a vehicle.

### BACKGROUND

In the era of electric intelligence, vehicles have become new iterative smart terminals. The update speed of the software is relatively fast. In order to match the update speed of the software, the development cycle of the vehicle hardware architecture is required to be shorter.

In the process of vehicle iteration, changes in the wheel base and the size of the battery pack are common variable requirements in vehicle floor processing, which will cause changes in the installation position of the battery pack. In order to adapt to this change and match various models at the same time, it usually takes a long period of time to design, process and fit the die-casting mold configured to process the vehicle floor, which makes the development cycle of the vehicle floor longer and cannot match the update speed of the vehicle software.

### SUMMARY

The present application provides a vehicle floor, a body-in-white and a vehicle, which solves the problems of poor common mode rate and long development cycle of the existing vehicle floor.

To achieve the above purpose, the present application adopts the following technical solutions:
In a first aspect, the present application provides a vehicle floor, including: a front floor and a rear floor provided in sequence from a vehicle head to a vehicle tail of a vehicle body, and a connecting assembly. The rear floor includes a first area obtained through a fixed mold and a second area obtained through a variable mold, and the second area of the rear floor is connected to the front floor. The connecting assembly is provided on the second area of the rear floor and is configured to connect to a battery pack of a vehicle, and a position of the connecting assembly on the second area is determined by a size of the battery pack and a wheel base of the vehicle body.

The vehicle floor provided in the present application includes: a front floor and a rear floor connected in sequence from the vehicle head to the vehicle tail of the vehicle body, and a connecting assembly. The rear floor includes a first area made of a fixed mold and a second area made of a variable mold. The connecting assembly is provided in the second area of the rear floor and is configured to fix the battery pack on the vehicle floor. The wheel bases and the sizes of the battery packs of vehicles of different sizes are different, which makes the positions where the battery pack is fixed on the vehicle floor different, resulting in different rear floors of different vehicles. In the vehicle floor of the present application, the variable area of the vehicle floor is concentrated in the second area of the rear floor. In this way, in the process of manufacturing the rear floor, it is only necessary to replace the mold for manufacturing the second area according to the actual situation. The mold for manufacturing the first area of the front floor and the rear floor can adopt a unified mold. Based on this, when manufacturing different vehicles, it is only necessary to change the mold for manufacturing the second area of the rear floor, thereby saving the time for manufacturing the mold, and further saving the time for manufacturing the vehicle floor, so that the development speed of the vehicle floor matches the update speed of the vehicle software, and the development cycle of the entire vehicle is greatly shortened.

In an embodiment, the connecting assembly includes a first connecting assembly and a second connecting assembly. The first connecting assembly and the second connecting assembly are provided on the second area of the rear floor at intervals, and both the first connecting assembly and the second connecting assembly are connected to the battery pack.

In an embodiment, the second area of the rear floor is provided with a first installation point and a second installation point, and positions of the first installation point and the second installation point are determined by the size of the battery pack and the wheel base of the vehicle body. The first connecting assembly is connected to the first installation point, and the second connecting assembly is connected to the second installation point.

In an embodiment, the first connecting assembly includes a plurality of first reinforcing ribs and a plurality of second reinforcing ribs. A first end of the first reinforcing rib is connected to the first installation point, and the second reinforcing rib is connected to second ends of two adjacent first reinforcing ribs.

The second connecting assembly includes a plurality of third reinforcing ribs and a plurality of fourth reinforcing ribs, a first end of the third reinforcing rib is connected to the second installation point, and the fourth reinforcing rib is connected to second ends of two adjacent third reinforcing ribs.

In an embodiment, both the first installation point and the second installation point are installation columns.

In an embodiment, the vehicle floor further includes a front floor body and a front floor extension body. A first end of the front floor extension body is connected to the front floor body, a second end of the front floor extension body is connected to the second area of the rear floor, and a length from the first end of the front floor extension body to the second end of the front floor extension body is determined by the wheel base of the vehicle body.

In an embodiment, a specific strength corresponding to a material of the vehicle floor is greater than a preset value.

In an embodiment, the vehicle floor is made of aluminum alloy or steel.

In a second aspect, the present application also provides a body-in-white, including the vehicle floor in the first aspect or any possible realization thereof.

Compared with the related art, the beneficial effects of the body-in-white provided in the present application are the same as the beneficial effects of the vehicle floor in the first aspect above and in any possible realization thereof, which are not described here.

In a third aspect, the present application also provides a vehicle, including the body-in-white in the second aspect.

Compared with the related art, the beneficial effects of the body-in-white provided in the present application are the same as the beneficial effects of the vehicle floor in the first aspect above and in any possible realization thereof, which are not described here.

### BRIEF DESCRIPTION OF THE DRAWINGS

FIG. 1 is a schematic structural view of a vehicle floor according to an embodiment of the present application.
FIG. 2 is a schematic structural view of a rear floor in the vehicle floor according to an embodiment of the present application.
FIG. 3 is a partial schematic structural view of a second area of the rear floor according to an embodiment of the present application.
FIG. 4 is a schematic structural view of a position change range of an installation point according to an embodiment of the present application.
FIG. 5 is a schematic structural view of the vehicle floor according to an embodiment of the present application.
FIG. 6 is a schematic structural view of an extension plate according to an embodiment of the present application.
FIG. 7 is a schematic structural view of the extension plate according to an embodiment of the present application.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by those skilled in the art based on the embodiments of the present application without creative efforts shall fall within the scope of the present application.

In the description of the present application, it should be understood that the terms "center", "upper", "lower", "front", "back", "left", "right", "vertical", "horizontal", "top", "bottom", "inside", "outside" indicate positions or positional relationships based on the positions or positional relationships shown in the accompanying drawings, which are only for the convenience of describing the present application and simplifying the description, rather than indicating or implying that the device or element referred to must have a specific orientation, be constructed and operated in a specific orientation, and therefore cannot be understood as a limitation of the present application.

In the description of the present application, it should be understood that terms "first", "second", etc. are only for the purpose of description, and should not be construed as indicating or implying relative importance or implicitly indicates the number of technical features indicated. Thus, a feature delimited with "first", "second" may expressly or implicitly include at least one of that feature. In the description of the present application, unless otherwise specified, "plurality of" means two or more.

In the description of the present application, it should be noted that, unless otherwise clearly specified and limited, the terms "installed", "connected" and "connecting" should be understood in a broad sense, for example, it can be a fixed connection, a detachable connection, or an integral connection. It can be a mechanical connection, an electrical connection, a direct connection, or an indirect connection through an intermediate medium, and it can be the communication within the two components. For those skilled in the art, the specific meanings of the above terms in the present application can be understood according to specific circumstances.

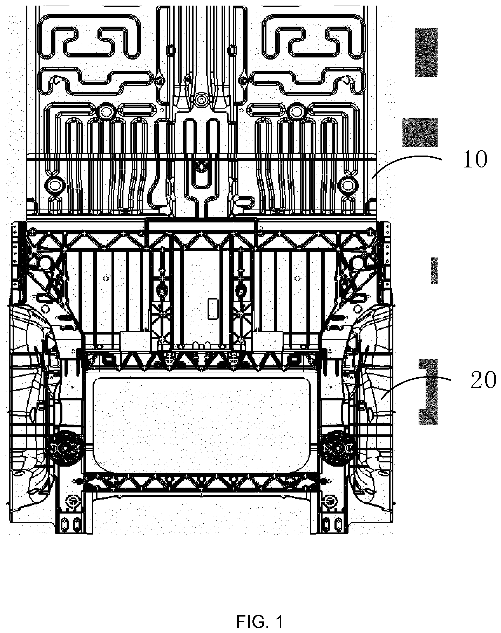

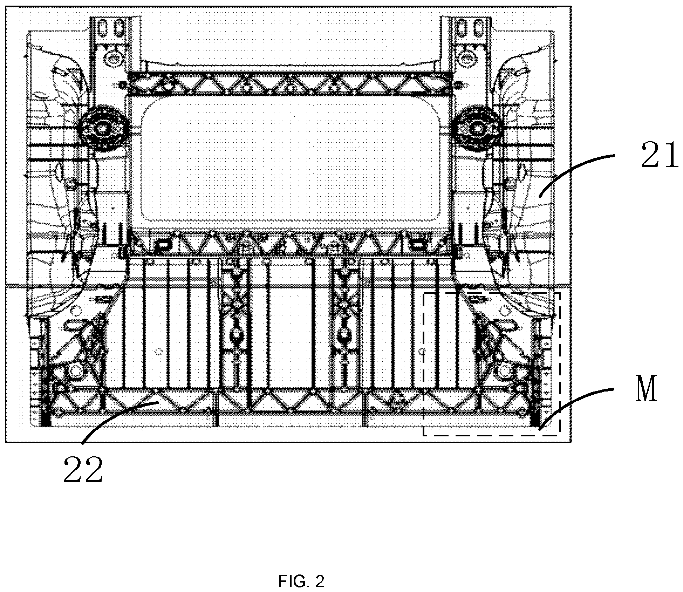

FIG. 1 is a schematic structural view of a vehicle floor according to an embodiment of the present application. FIG. 2 is a schematic structural view of a rear floor in the vehicle floor according to an embodiment of the present application.

As shown in FIG. 1, the vehicle floor provided in the embodiment of the present application may include: a front floor 10 and a rear floor 20 provided in sequence from the vehicle head to the vehicle tail of the vehicle body, and a connecting assembly (the connecting assembly is not shown in FIG. 1 and FIG. 2). As shown in FIG. 2, the rear floor 20 may include: a first area 21 and a second area 22. The second area 22 of the rear floor 20 is connected to the front floor 10, the first area 21 is obtained through a fixed mold, and the second area 22 is obtained through a variable mold. The connecting assembly is provided on the second area 22 of the rear floor 20, and is configured to connect with the battery pack of the vehicle. The position of the connecting assembly on the second area 22 is determined by the wheel base of the vehicle body and the size of the battery pack.

The vehicle floor provided in the embodiment of the present application includes: a front floor 10 and a rear floor 20 connected in sequence from the vehicle head to the vehicle tail of the vehicle body, and a connecting assembly. The rear floor 20 includes a first area 21 made of a fixed mold and a second area 22 made of a variable mold. The connecting assembly is provided in the second area 22 of the rear floor 20, and is configured to fix the battery pack on the vehicle floor. The wheel bases and the sizes of the battery packs of vehicles of different sizes are different, which makes the positions where the battery pack is fixed on the vehicle floor different, resulting in different rear floors 20 of different vehicles. In the vehicle floor of the present application, the variable area of the vehicle floor is concentrated in the second area 22 of the rear floor 20. In this way, in the process of making the rear floor 20, it is only necessary to replace the mold for making the second area 22 according to the actual situation. The mold for making the first area 21 of the front floor 10 and the rear floor 20 can all be a unified mold. Based on this, when manufacturing different vehicles, only the mold for making the second area 22 of the rear floor 20 needs to be changed, which saves the time for making the mold, and saves the time for making the vehicle floor, so that the development speed of the vehicle floor matches the update speed of the vehicle software, and the development cycle of the entire vehicle is greatly shortened.

It should be noted that the variability of the variable mold can be reflected in the variable position of the insert in the mold.

In an embodiment, the connecting assembly may include a first connecting assembly and a second connecting assembly. The first connecting assembly and the second connecting assembly are provided on the second area 22 of the rear floor 20 at intervals, and the first connecting assembly and the second connecting assembly are both connected to the battery pack.

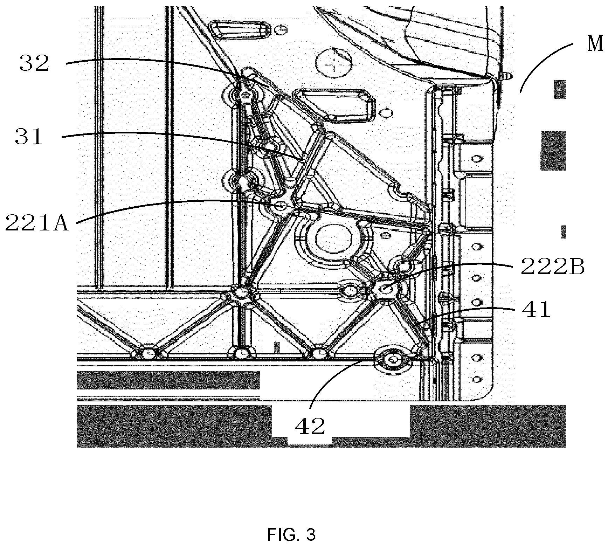

FIG. 3 is a partial schematic structural view of a second area of the rear floor according to an embodiment of the present application.

In an embodiment, as shown in FIG. 3, the second area 22 of the rear floor 20 is provided with a first installation point 221A (or 221C) and a second installation point 222B (or 222D). The positions of the first installation point 221A (or 221C) and the second installation point 222B (or 222D) can be determined by the wheel base of the vehicle body and the size of the battery pack. The first connecting assembly is connected to the first installation point 221A (or 221C), and the second connecting assembly is connected to the second installation point 222B (or 222D).

In actual application, when the size of the battery pack or the wheel base of the vehicle body changes, resulting in a change in the installation point of the battery pack, it is only necessary to redesign and manufacture the insert in the mold of the second area 22 of the rear floor. That is, the inserts in different molds can be flexibly switched according to the plan, so as to achieve the purpose of mold sharing and save production costs.

In an embodiment, as shown in FIG. 3, the first installation point and the second installation point can both be installation columns.

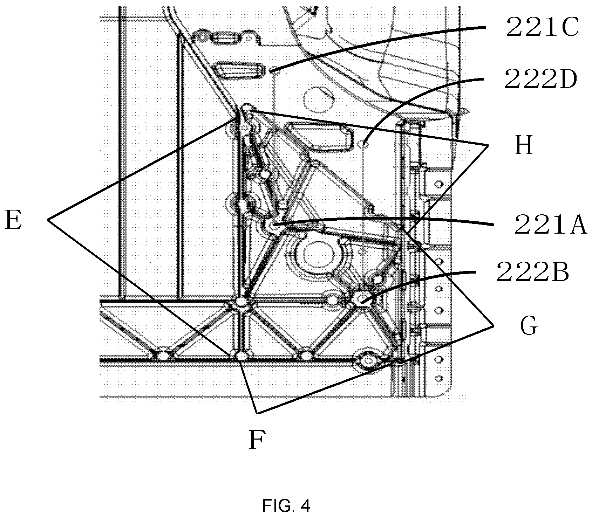

FIG. 4 is a schematic structural view of a position change range of an installation point according to an embodiment of the present application.

In an embodiment, as shown in FIG. 4, the positions of the first installation point and the second installation point can be changed in the length direction of the vehicle body. Specifically, the first installation point 221A and the second installation point 222B are the positions of the installation points when the size of the battery pack is the smallest. The first installation point 221C and the second installation point 222D are the positions of the installation points when the size of the battery pack is the largest. The position of the first installation point varies from 221A to 221C, and the position of the second installation point varies from 222B to 222D.

In an embodiment, as shown in FIG. 3 and FIG. 4, the first connecting assembly may include: a plurality of first reinforcing ribs 31 and a plurality of second reinforcing ribs 32. The first end of the first reinforcing rib 31 is connected to the first installation point, and the second reinforcing rib 32 is configured to connect the second ends of two adjacent first reinforcing ribs 31. The second connecting assembly may include: a plurality of third reinforcing ribs 41 and a plurality of fourth reinforcing ribs 42. The first end of the third reinforcing rib 41 is connected to the second installation point, and the fourth reinforcing rib 42 is configured to connect the second ends of two adjacent third reinforcing ribs 41.

As shown in FIG. 3 and FIG. 4, in order to ensure the stability of each installation point, the plurality of second reinforcing ribs 32 and the plurality of fourth reinforcing ribs 42 form an irregular quadrilateral area. The quadrilateral area may be formed by a first boundary E, a second boundary F, a third boundary G and a fourth boundary H. The second boundary F, the third boundary G and the fourth boundary H are hard boundaries, which are defined by the structure; the first boundary E is a soft boundary, which is determined by the material properties and the casting process. The plurality of first reinforcing ribs 31 are all centered on the first installation point, and form a plurality of stable triangles with the plurality of second reinforcing ribs 32. Similarly, the plurality of third reinforcing ribs 41 are all centered on the second installation point, and form a plurality of stable triangles with the plurality of fourth reinforcing ribs 42. In practical applications, the density of the triangles may be increased according to actual needs. At the same time, in order to meet the lightweight design requirements, the number of triangles should not be too many. In other words, the number of reinforcing ribs must be appropriate so that the shape of the obtained triangle is appropriate, which not only ensures stability but also meets the lightweight design requirements.

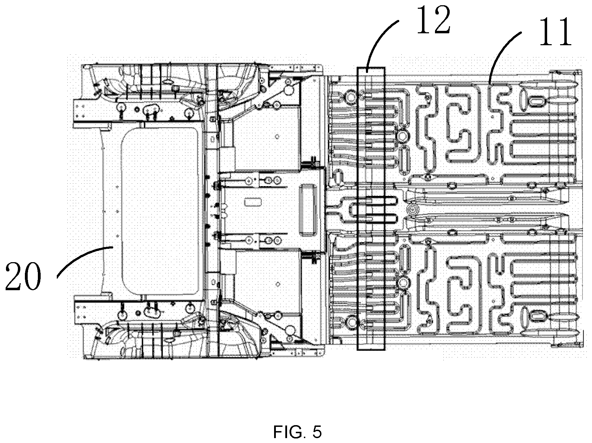

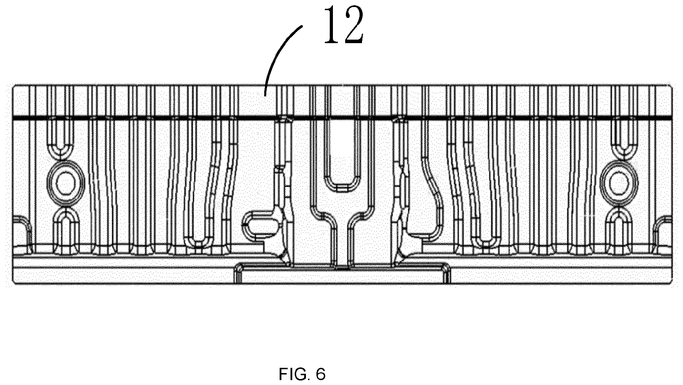

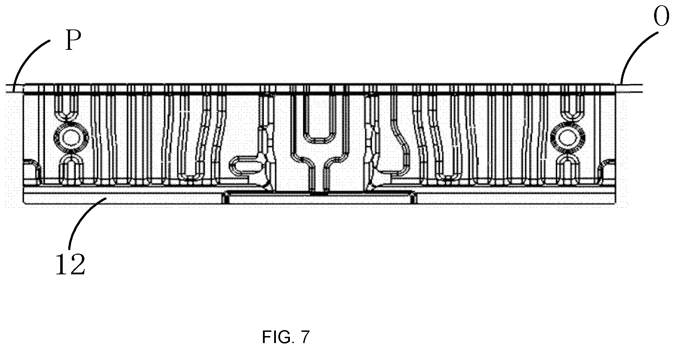

FIG. 5 is a schematic structural view of the vehicle floor according to an embodiment of the present application. FIG. 6 is a schematic structural view of an extension plate according to an embodiment of the present application. FIG. 7 is a schematic structural view of the extension plate according to an embodiment of the present application.

In an embodiment, as shown in FIG. 5, the front floor 10 may include a front floor body 11 and a front floor extension body 12. The first end of the front floor extension body 12 is connected to the front floor body 11, and the second end of the front floor extension body 12 is connected to the second area 22 of the rear floor 20. The length from the first end to the second end of the front floor extension body 12 may be determined by the wheel base of the vehicle body.

In order to minimize the degree of change of the front floor 10 due to the change of the wheel base of the vehicle body, the embodiment of the present application divides the front floor 10 into the front floor body 11 and the front floor extension body 12. The front floor body 11 is made of a fixed mold, which can be applied to a variety of vehicle models, and the length of the front floor extension body 12 can change with the change in the wheel base of the vehicle body of specific vehicle models. That is, during the production process, only the front floor extension body 12 needs to be adjusted.

Specifically, as shown in FIG. 6, when designing the mold of the front floor extension body 12, it can be designed according to the longest wheel base of the vehicle body (that is, the maximum length of the front floor extension body 12). The cutters of different wheel bases are flexibly switched through the mechanism on the mold, so as to obtain front floor extensions 12 of different lengths, thereby realizing the sharing of the mold of the front floor extension body 12. As shown in FIG. 7, the front floor extension in FIG. 7 is the front floor extension body 12 with the minimum length. The boundary P is a fixed boundary and the boundary O is a variable boundary.

In actual application, a vehicle floor suitable for different vehicles can be obtained by changing the position of the installation point of the second area 22 of the rear floor 20 and/or the length of the front floor extension body 12. In this process, only part of the mold needs to be adjusted to achieve the purpose of mold sharing to the greatest extent.

In an embodiment, the specific strength corresponding to the material of the vehicle floor provided in the embodiment of the present application is greater than a preset value. The specific value of the preset value can be determined according to actual conditions, which is not limited in the present application.

In an embodiment, the vehicle floor can be made of aluminum alloy or steel.

In an embodiment of the present application, a body-in-white is also provided, and the body-in-white includes the vehicle floor.

Compared with the related art, the beneficial effects of the body-in-white provided in the embodiment of the present application are the same as the beneficial effects of the vehicle floor, which are not described in detail here.

In an embodiment of the present application, a vehicle is also provided, and the vehicle includes the body-in-white.

Compared with the related art, the beneficial effects of the vehicle provided in the embodiment of the present application are the same as the beneficial effects of the vehicle floor, which are not described in detail here.

The above are only some embodiments of the present application. It should be pointed out that for those skilled in the art, several improvements and substitutions can be made without departing from the technical principles of the present application. These improvements and substitutions should also be regarded to be in the scope of the present application.

## Claims

1. A vehicle floor, **characterized by** comprising: a front floor and a rear floor provided in sequence from a vehicle head to a vehicle tail of a vehicle body, and a connecting assembly; wherein
the rear floor comprises a first area obtained through a fixed mold and a second area obtained through a variable mold, and the second area of the rear floor is connected to the front floor; and
the connecting assembly is provided on the second area of the rear floor and is configured to connect to a battery pack of a vehicle, and a position of the connecting assembly on the second area is determined by a size of the battery pack and a wheel base of the vehicle body.

2. The vehicle floor according to claim 1, wherein the connecting assembly comprises a first connecting assembly and a second connecting assembly; and
the first connecting assembly and the second connecting assembly are provided on the second area of the rear floor at intervals, and both the first connecting assembly and the second connecting assembly are connected to the battery pack.

3. The vehicle floor according to claim 2, wherein the second area of the rear floor is provided with a first installation point and a second installation point, and positions of the first installation point and the second installation point are determined by the size of the battery pack and the wheel base of the vehicle body; and
the first connecting assembly is connected to the first installation point, and the second connecting assembly is connected to the second installation point.

4. The vehicle floor according to claim 3, wherein the first connecting assembly comprises a plurality of first reinforcing ribs and a plurality of second reinforcing ribs, a first end of the first reinforcing rib is connected to the first installation point, and the second reinforcing rib is connected to second ends of two adjacent first reinforcing ribs; and
the second connecting assembly comprises a plurality of third reinforcing ribs and a plurality of fourth reinforcing ribs, a first end of the third reinforcing rib is connected to the second installation point, and the fourth reinforcing rib is connected to second ends of two adjacent third reinforcing ribs.

5. The vehicle floor according to claim 3, wherein both the first installation point and the second installation point are installation columns.

6. The vehicle floor according to any one of claims 1 to 5, further comprising a front floor body and a front floor extension body, wherein
a first end of the front floor extension body is connected to the front floor body, a second end of the front floor extension body is connected to the second area of the rear floor, and a length from the first end of the front floor extension body to the second end of the front floor extension body is determined by the wheel base of the vehicle body.

7. The vehicle floor according to claim 6, wherein a specific strength corresponding to a material of the vehicle floor is greater than a preset value.

8. The vehicle floor according to claim 7, wherein the vehicle floor is made of aluminum alloy or steel.

9. A body-in-white, **characterized by** comprising the vehicle floor according to any one of claims 1 to 8.

10. A vehicle, **characterized by** comprising the body-in-white according to claim 9.
